# EUROPEAN PATENT APPLICATION

(11) **EP 1 081 709 A2**
(43) Date of publication of application: **07.03.2001**
(21) Application number: 00118622.0
(22) Date of filing: 28.08.2000
(51) Int. Cl.: G11B 33/04

(54) **Tray container casing**

(30) Priority: 01.09.1999 JP 24806599
(71) Applicant: SONY CORPORATION, Tokyo (JP); START LAB INC., Tokyo (JP)
(72) Inventor: Ishii, Hirohisa, Shinagawa-ku, Tokyo (JP)
(74) Representative: MÜLLER & HOFFMANN Patentanwälte

(57) **Abstract**

A tray container casing for accommodating a plurality of disc trays adapted for accommodating an optical disc or the like, in which the optical disc accommodated in the tray container casing can be retrieved with improved operability. To this end, the tray container casing includes main casing member 106 provided with a tray container 105 for accommodating plural disc trays in a stacked state in a direction of the thicknesses of the disc trays and with an opening 107 through which the disc tray 1 is inserted or ejected to or from the tray container 105, and a lid 108 for opening/closing the opening 107 of the main casing member 106. Within the main casing member 106, there is provided a step difference unit 111 for arraying label indicators 12 of plural disc trays 1 housed in a stacked state in the tray container 105 so that these label indicators 12 face to outside in a vertically staggered relation to one another.

## Description

### BACKGROUND OF THE INVENTION

### Field of the Invention

This invention relates to a tray container casing for accommodating a plurality of disc trays adapted for accommodating discs, such as optical discs or magneto-optical discs.

### Description of Related Art

Up to now, conventional optical discs are offered to the market as the discs are housed in disc cases. For example, among conventional disc cases, accommodating the CD (compact disc) or the CD-ROM (read-only memory) therein, there is known a case having the thickness of the order of 10 mm.

A conventional disc case is made up of a disc holding member, on which an optical disc is set and held in place, a main casing member, accommodating this disc holding member, and a lid provided for opening/closing relative to the main casing member.

The disc holding member is formed of a resin material as a substantially rectangular plate, and has a mid holding portion adapted for holding a center opening of the optical disc. The outer periphery of the disc holding member is formed integrally with an engagement pawl adapted for detachably engaging with the main casing member.

The main casing member is formed of a transparent resin material as a rectangular member, and has a housing section for accommodating the disc holding member. The housing section is formed integrally with an engagement recess, in which is engaged the pawl of the disc holding member, whereby the disc holding member is detachably contained in the housing section.

The lid is formed of a transparent resin material to a rectangular profile and is of a size sufficient to cover the optical disc held by the disc holding member. The lid is formed integrally with a hinge including a pivot rotatably supported by the main casing member. The main casing member includes an opening for supporting the pivot of the lid hinge and rotatably supports the lid via this pivot.

On the inner side of the lid is formed a label housing section for accommodating a first label sheet for displaying the contents of the information recorded on the optical disc accommodated in the disc housing member and a booklet having this first label sheet. This label housing section is formed integrally with plural holding pawls for holding the first label sheet etc.

A second label sheet is arranged astride the back and bottom sides of the main casing member. This second label sheet includes a title label, demonstrating the title of the information contents recorded on the optical disc, and an index label demonstrating the recording contents f the optical disc. The title label and the index label face the back side and the bottom side of the main casing member, respectively.

In the above-described disc case, the optical disc is held by the disc holding member, whilst the lid may be closed relative to the main casing member to accommodate the optical disc therein.

The conventional disc case is utilized in such a manner that, in accommodating a large number of discs side-by-side in a housing shelf or in a casing housing box, the disc cases are arrayed so that only the title labels of the second label sheet, positioned on the back surface side of each disc case, will face outwards to permit the recording contents of the optical disc to be recognized to allow for retrieving an optical disc the title label of which is required.

Meanwhile, in the above-described conventional casing housing box, the title label entry column of a second label sheet of the disc case accommodated in the casing container is of a narrow width, so that letters entered therein are difficult to view to render it difficult to retrieve such one of the large number of disc cases arrayed side-by-side in the disc container which accommodates a desired optical disc.

In addition, in the conventional casing housing box, there is no finger support on the outer periphery of the disc case by which the user pulls out the disc case with finger's end, so that a desired disc case housed in the casing container cannot be taken out with ease to lower the operability in taking out the disc case.

Moreover, if, in the conventional casing housing box, there is any vacant space in the casing container housing containing plural disc cases, the disc cases tend to be levelled down towards the vacant space to render it difficult to keep the title labels of the disc cases arrayed facing to outside. The result is that, if there is a vacant space in the casing container, it becomes more difficult to in addition, in the retrieve the desired optical disc.

In addition, in the conventional casing housing box, the operation of arraying the levelled-down disc cases in a vacant space left in the casing housing section in which only a few disc cases are already housed, to secure a housing space for other disc cases, represents a laborious operation.

### SUMMARY OF THE INVENTION

It is therefore an object of the present invention to provide a tray container casing in which the recording contents of each optical disc housed therein can be viewed readily to improve the operability in retrieving the desired optical disc to render it possible to have the optical discs accommodated efficiently.

A tray container casing according to the present invention is adapted for housing a plurality of disc trays each including a disc housing recess for housing an optical disc and a title indicating portion having a title label demonstrating the recording contents of the information of the optical disc accommodated in the disc housing recess. The title indicating portion is provided adjacent to the outer rim of at least a major surface of the disc tray. The tray container casing includes a main casing member having a tray container for housing a plurality of the disc trays in a stacked fashion in the direction of the thickness thereof and an opening through which the disc trays are inserted or ejected into or from the tray container, and a lid for opening/closing the aperture of the main casing member.

The main casing member carries a step difference unit for arraying the disc trays housed in a stacked fashion in the tray container so that the respective title indicating portions of the disc tray will face to outside in a vertically staggered relation to one another.

In the above-described tray container casing, the disc trays housed in the main casing member are arrayed in a vertically staggered relation to one another by the step difference unit provided in the main casing member to cause the title indicators to face outwards to permit the title indicators to be viewed. Thus, with the present tray container casing, the one of disc trays accommodated in the tray container which holds the desired optical disc can be retrieved with improved operability.

In the tray container casing according to the present invention, since the title indicating portions of the disc trays accommodate in the disc containers can be viewed to improve the operability in retrieving the desired optical disc from plural disc trays housed in the tray container casing significantly.

Moreover, in the present tray container casing, a large number of optical discs can be accommodated efficiently, it is possible to reduce the housing spacing required in accommodating a large number of the optical discs.

### BRIEF DESCRIPTION OF THE DRAWINGS

Fig.1 is a plan view showing a disc tray of the present invention looking from its first surface.
Fig.2 is a side view of the disc tray.
Fig.3 is a plan view showing a disc tray of the present invention looking from its second surface.
Fig.4 is a plan view for illustrating a capacity display unit provided on the disc tray.
Fig.5 is a plan view showing the state of an optical disc housed in the disc tray, looking from its first surface.
Fig.6 is a plan view showing the state of an optical disc housed in the disc tray, looking from its second surface.
Fig.7 is a plan view showing another disc tray from its first surface.
Fig.8 is a side view showing the disc tray of Fig.7.
Fig.9 is a plan view showing the disc tray of Fig.7 from its first surface.
Fig. 10 is a plan view showing the state of an optical disc housed in the disc tray of Fig.7, looking from its first surface.
Fig. 11 is a plan view showing the state of an optical disc housed in the disc tray of Fig.7, looking from its second surface.
Fig. 12 is a perspective view showing a tray container casing according to the present invention.
Fig. 13 is a perspective view showing the opened state of a lid of the tray container.
Fig. 14 is a side view showing the opened state of a lid of the tray container.
Fig. 15 is a side view showing the lid.
Fig. 16 is a side view for illustrating the lid opening/closure operation.
Fig. 17 is a plan view showing a modified disc tray housed in a modified tray container, looking from a first surface of the disc tray.
Fig. 18 is a plan view showing the modified disc tray from its second surface.
Fig. 19 is a front view showing the modified tray container casing.
Fig.20 is a side view showing the modified tray container casing.
Fig.21 is a bottom plan view showing the modified tray container casing.
Fig.22 is a perspective view for illustrating the step difference unit of the modified tray container casing.
Fig.23 is a front view showing the state in which plural disc trays have been housed in the modified tray container casing.
Fig.24 is a side view showing the state in which plural disc trays have been housed in the modified tray container casing.

### DESCRIPTION OF THE PREFERRED EMBODIMENTS

Referring to the drawings, preferred embodiments of a disc tray accommodating an optical disc and a tray container casing for accommodating plural disc trays therein, according to the present invention, will be explained in detail.

The disc tray 1, accommodated in a tray container casing according to the present invention, is used for housing a CD-R (Recordable), on which the information can be recorded only once, or a CD-RW (Rewritable), on which the information can be rewritten, as an optical disc. Of course, the disc tray can be used for housing other different optical discs, such as replay-only CD (Compact Disc) carrying pre-recorded information, a CD-ROM (read-Only Memory) or DVD (Digital Versatile Disc).

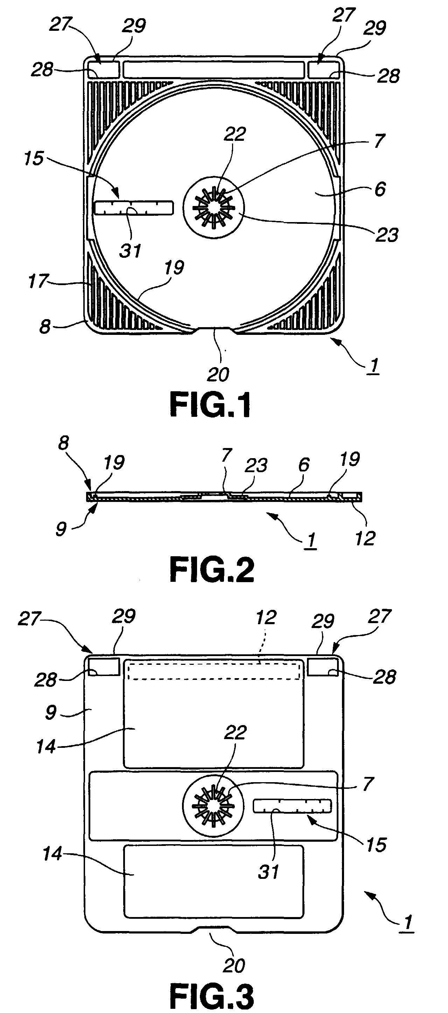

A disc tray 1 is formed of a resin material to a substantially rectangular flat plate profile, and is of a thickness of the order of 4 mm, as shown in Figs.1 and 2. This disc tray 1 has a disc holding recess 6, in which to accommodate an optical disc 5, and a holder 7 for holding a center opening of the optical disc 5, as shown in Figs.1 and 2.

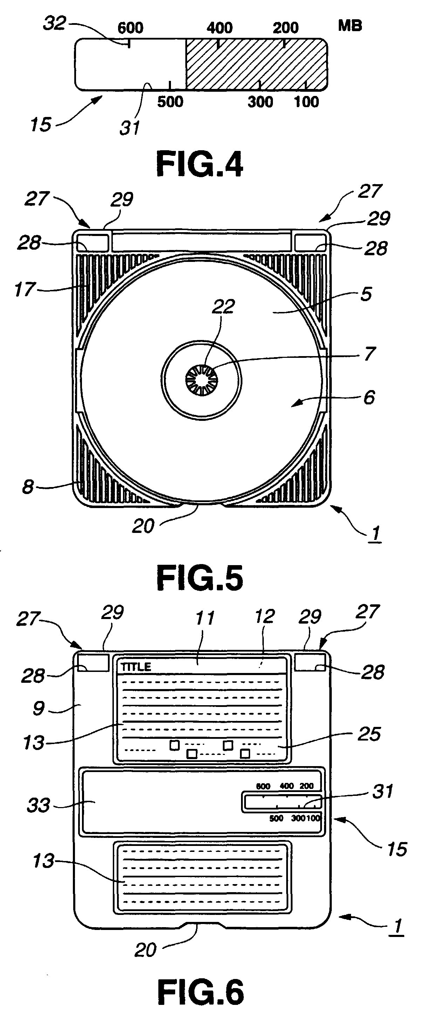

The disc tray 1 also includes a title indicator 12 on which is bonded a title label 11 indicating the title of the recording contents of the optical disc 5 and an index indicator 14 on which is bonded an index label 13 showing details of the index or memoranda to the recording contents of the optical disc 5, as shown in Figs.3 and 6.

The disc tray 1 also includes, on a bottom surface of the disc holding recess 6, a capacity indicator 15 for measuring the used capacity value and a vacant capacity value of the recording area of the optical disc 5, held in the holder 7, as shown in Figs.3, 4 and 6.

The disc holding recess 6 is formed on a first surface 8 of the disc tray 1 to the profile of a circle inscribing the outer rim of the disc tray 1, as shown in Figs.1, 2 and 5. The disc holding recess 6 is of a diameter slightly larger than the diameter of the optical disc held therein. The disc tray 1, which is of a reduced thickness, is formed integrally with plural linear reinforcement ribs 17 extending between the outer rim of the disc tray 1 and the outer rim of the disc holding recess 6 to assure mechanical strength, as shown in Fig. 1. The optical disc 5 is housed in this disc holding recess 6 so that its light transmitting layer side, irradiated with the laser light, will be directed to the bottom surface of the disc tray 1.

On the bottom surface of the disc holding recess 6 is integrally formed a substantially toroidally-shaped supporting projection 19, facing the outer rim of the recording area of the optical disc 5 held in the disc holding recess 6, as shown in Figs. 1 and 2. The supporting projection 19 is positioned so that a pre-set gap is provided between it and the light transmitting layer of the optical disc 5. This supporting projection 19 is formed as a continuous circle extending along the outer rim of the optical disc 5 and is substantially of a toroidal profile, except that it is interrupted by a cut-out 20, as will be explained subsequently.

The supporting projection 19 compresses against the outer rim of the optical disc 5 to support it when a load is applied from outside to the optical disc 5 housed in the disc holding recess 6 to reliably prohibit the light transmitting layer of the optical disc 5 from compressing against the bottom of the disc holding recess 6 to prevent possible destruction of the recording area of the optical disc 5.

In the outer rim of the disc holding recess 6 is formed the cut-out 20, so that a portion of the outer rim of the optical disc 5 housed in the disc holding recess 6 faces outwards, as shown in Fig. 1. The cut-out 20 is provided at a position inscribing the outer rim of the disc tray 1 and is used for taking out the optical disc 5 contained in the disc holding recess 6.

The holder 7 is provided centrally of the bottom surface of the disc holding recess 6, and is formed integrally with plural elastically flexible radially extending engagement pawls 22, as shown in Figs. 1 and 2. On the outer rim side of the holder 7, the disc tray 1 is formed integrally with a support 23 for supporting the outer rim portion of the center opening of the optical disc 5, carried by the holder 7, as shown in Figs.1 and 2.

The title indicator 12 is provided as a substantially strip-shaped region neighboring to the disc holding recess 6, for facing the outer rim of the disc tray 1, as shown in Figs.2 and 6. The title indicator 12 is formed as a planar surface on a second surface 9 of the disc tray 1. The title indicator 12 is a substantially strip-shaped area, with a width of the order of, for example, 10 mm, which is necessary and sufficient to permit inscription of letters in the title entry column of the title label 11. It is of course possible to enter the information other than the title of the recording contents, such as memoranda.

Since the title indicator 12 is formed to a reduced thickness, plural linear reinforcement ribs may be formed integrally with the first surface 8 not bearing the title label 11 to assure mechanical strength, if so desired.

The index indicator 14 is formed as a planar surface on the second surface 9 of the disc tray 1, as shown in Figs.3 and 6.

The title label 11 and the index label 13, affixed to the title indicator 12 and to the index indicator 14, respectively, are each in the form of a sticker sheet having an adhesive layer. The title label 11 is provided with a substantially strip-shaped title column in register with the title indicator 12. The index label 13 is provided with a collating column 25 in which to enter marks corresponding to the information recording system for e.g., the CD-R or the CD-RW, as shown in Fig.6. The title label 11 and the index label 13 may also be integrated to a sole label, if so desired.

The disc tray 1 is also provided with take-out operating portions 27, for facilitating the taking out of the disc tray 1 contained in a tray container casing, on both sides in the width-wise direction thereof, with the title indicator 12 in-between, as shown in Fig.1. The take-out operating portions 27 are each provided with a substantially rectangular opening 28 into which to insert the finger of a user. The disc tray 1 can be easily taken out by intruding the finer end into the opening 28 to hold an outer rim 29 of the opening 28. Although the take-out operating portions 27 is formed as the opening 28, it may also be formed as a recess having an inner wall in an opening or as a protuberance or a groove formed on the outer rim of the disc tray 1.

These take-out operating portions 27 are provided on both sides of the title indicator 12 to permit a facilitated taking-out operation irrespective of whether the user is a right-handed or left-handed and to permit the disc tray 1 to be taken out no matter whether it is the first surface 8 or the second surface 9 of the disc tray 1 housed in the tray container casing that is facing outwards.

The capacity indicator 15 includes an aperture 31 for exposing a portion of the recording area of the optical disc 5 housed in the disc holding recess 6 to outside across the innermost side and the outermost sides of the disc and graduations 32 provided for extending along the radius of the disc adjacent to the aperture 31 at a preset interval associated with the format of the optical disc 5, as shown in Figs. 1, 3 and 4.

The aperture 31 is in the form of a rectangular slit, extending parallel to the longitudinal direction of the title indicator 12, corresponding to the width-wise direction of the disc tray 1, as shown in Fig.4.

The graduations 32 are formed integrally for being protruded as protuberances into the inside of the aperture 3. If the optical disc 5 housed in the disc tray 1 is a CD-R or a CD-RW, the graduations 32 are formed so that the numerical value indication thereof will be decreased at a step of 100 MB (megabytes) from an end of the graduations corresponding to the inner rim side of the recording area of the optical disc 5 towards the other end of the graduations corresponding to its outer rim side. The graduations 32 may also be recessed, while the indication of numerical values may be on the disc tray 1.

In the capacity indicator 15, a measurement label 33, carrying the printed indication at a pre-set interval corresponding to the graduations 32, is stuck in the vicinity of the aperture 31. The measurement label 33 is formed as a so-called sticker sheet carrying an adhesive layer.

Meanwhile, the CD-R or the CD-RW has a dye layer or a phase change layer, as an information recording layer. The color tone of the information recording layer is changed as the information is recorded from the inner rim towards the outer rim of the recording area by way of recording the information in the recording area. Thus, in this CD-R or CD-RW, the used area, where the information has been recorded, and the vacant area, where the information has not been recorded, can be recognized by the difference in color tone, on viewing the recording area.

In the above-described capacity indicator 15, in which the recording area of the optical disc 5 housed in the disc holding recess 6 can be viewed through the aperture 31, the vacant capacity value, as the residual capacity, corresponding to the recordable recording area, can readily be recognized by measuring the boundary position of the color tone difference in the recording area, based on the graduations.

Therefore, if, in this capacity indicator 15, the magnitude of the recordable vacant capacity of the CD-R or the CD-RW is to be recognized, the painstaking operation of capacity checking by a computer on loading the CD-R or the CD-RW on the disc drive device may be dispensed with to permit the vacant capacity to be grasped readily.

Although the above-described capacity indicator 15 is provided with a display which permits measurement of the vacant capacity value of the recording area, it is of course possible to provide a display which permits measurement of the used capacity value.

Although the capacity indicator 15 is formed as the aperture 31, it is unnecessary to provide the aperture 31 if the disc tray 1 in its entirety or the disc holding recess 6 is formed of a light transmitting material. The capacity indicator 15 may also be comprised of a panel or sheet material of a UV cut-off light transmitting material, which is built into the aperture 31.

Although not shown, plural sorts of graduations, associated with plural sorts of the optical discs having different formats, may be provided in the capacity indicator 15. There may also be provided graduations associated with recording areas of the optical discs of different diameters.

The disc tray may also be provided with plural capacity indicators associated respectively with plural sorts of the optical discs having different formats.

The state in which the optical disc 5 is housed in the disc holding recess 6 in the above-described disc tray 1 is hereinafter explained with reference to the drawings.

Referring to Fig.5, the optical disc 5 is housed in the disc holding recess 6 of the disc tray 1, with the light transmitting layer side of the optical disc 5 facing the bottom surface of the disc holding recess 6, and has its center opening held by the holder. The optical disc 5, housed in the disc holding recess 6, has its portion outside the center opening set on the support 23. If a load is applied from outside on the optical disc 5 housed in the disc holding recess 6, the optical disc 5 is supported with the outer rim of the recording area thereof resting on the supporting projection 19, thus reliably protecting the recording area of the optical disc 5.

With the disc tray 1, its recording area can be viewed through the aperture 31 of the capacity indicator 15, as the optical disc 5 is housed in the disc holding recess 6, as shown in Fig.6. Therefore, the vacant capacity of the optical disc 5 can be grasped readily by measuring the boundary position of the different in the color tone of the recording area of the optical disc 5 by the capacity indicator 15.

With the disc tray 1, as described above, the packaging configuration for the optical disc 5 can be simpler to provide a small-sized disc tray of a reduced thickness. Thus, with the disc tray 1, the housing space can be reduced appreciably.

Moreover, with the present disc tray 1, in which the used capacity value and/or the vacant capacity value of the optical disc 5 housed in the disc holding recess 6 can be measured by the capacity indicator 15, the used capacity value and/or the vacant capacity value can be grasped readily and promptly.

In the above-described disc tray 1, the title label 11, index label 13 or the measurement label 33 are stuck with an adhesive. Referring to the drawings, an alternative structure of the disc tray, which permits label sheets indicating the recording contents of the optical disc 5 to be exchanged readily, is explained. Since the present disc tray has the basic structure in common with the above-described disc tray 1, the same parts or components are depicted by the same reference numerals and the corresponding description is omitted for simplicity.

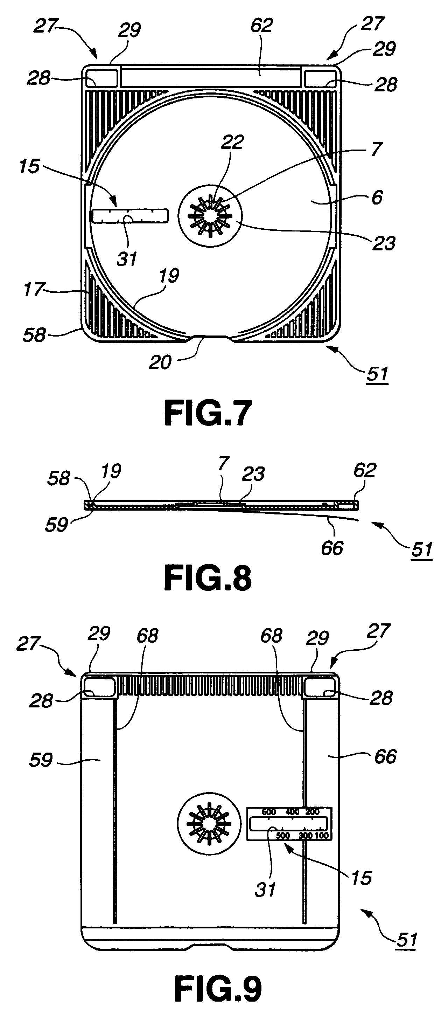

A disc tray 51 has a title indicator 62, on which is stuck a title label 61, showing titles of the recording contents of the information recorded on the optical disc 5 housed in the disc holding recess 6, and an index indicator 64, which is provided with a label sheet 63 showing the indices and memoranda for the recording contents of the optical disc 5, as shown in Figs.7 to 11.

The title indicator 62 is formed as a planar surface on a first surface 58 of the disc tray 51, as shown in Figs.7, 8 and 11. The index indicator 64 is formed on a second surface 59 of the disc tray 51, and a film sheet 66 for clamping a label sheet is provided between the index indicator 64 and the second surface 59.

On the label sheet 63 are printed a title entry column for the recording contents of the information recorded on the optical disc 5, an index entry column and a picture etc. The label sheet 63 is arranged so that the title entry column overlies the title indicator 62.

A film sheet 66 is formed of a resin material exhibiting light transmitting properties and is of a toughness sufficient to hold the label sheet 63 in a sandwiched state between the second surface 59 of the disc tray 51 and the film sheet 66.

The film sheet 66 is of an area sufficient to cover the entire surface of the label sheet 63 and is slightly smaller in outer size slightly than the disc tray 51, as shown in Fig.9. The lateral side end of the film sheet 66 is stuck to the lateral side end of the second surface 59 of the disc tray 51 in register with the title indicator 62, as shown in Fig.8 and 9.

Since the film sheet 66 can be elastically deformed from one lateral side end relative to the first surface 59 of the disc tray 51 by way of folding, the label sheet 63 can be readily introduced into or withdrawn from the spacing between the film sheet 66 and the disc tray 51.

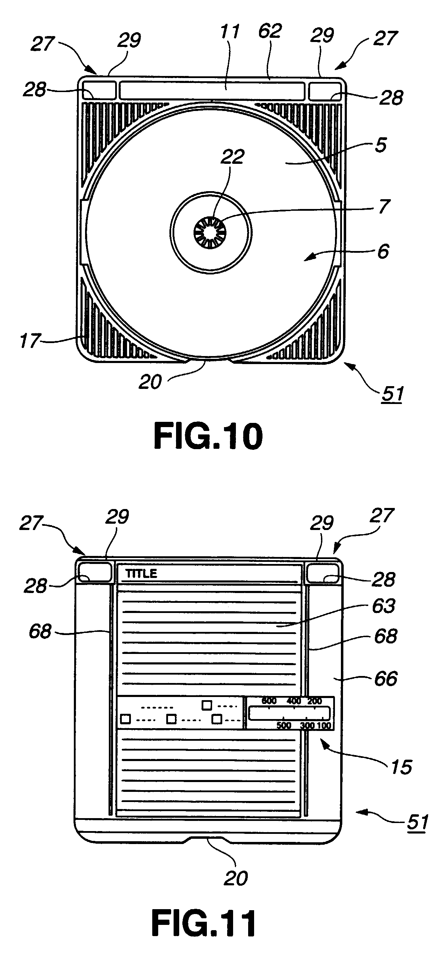

In the second surface 59 of the disc tray 51 are formed a pair of linear guide grooves 68, 68 for arranging the label sheet 63 in position, as shown in Figs.9 and 11. The disc tray 51 can be mounted in position readily by positioning the label sheet 63 in the guide grooves 68, 68 and by holding the label sheet 63 by the film sheet 66.

In the above-described alternative structure of the disc tray 51, provided with the film sheet 66, detachably holding the label sheet 63, the label sheet 63 can be exchanged readily.

Referring to the drawings, a tray container casing for accommodating plural disc trays 1, 51, constructed as described above, is explained in detail. Although the following description is directed to a tray container casing for accommodating plural disc trays 1, the present invention can, of course, be constructed to accommodate the above-described disc tray 51.

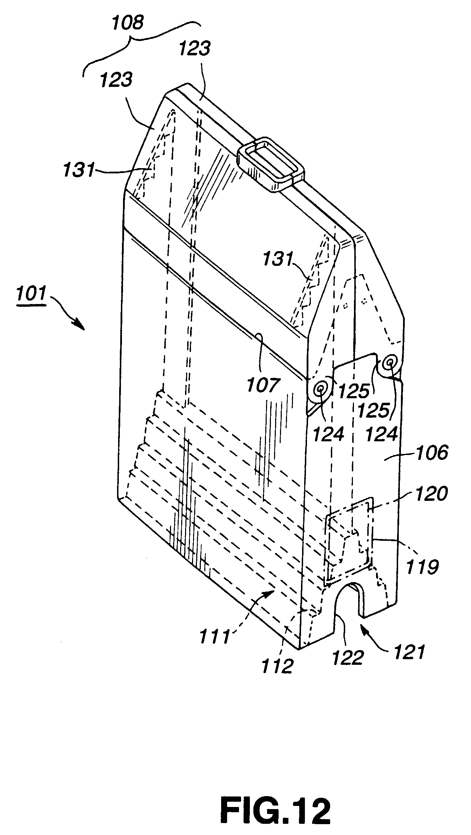

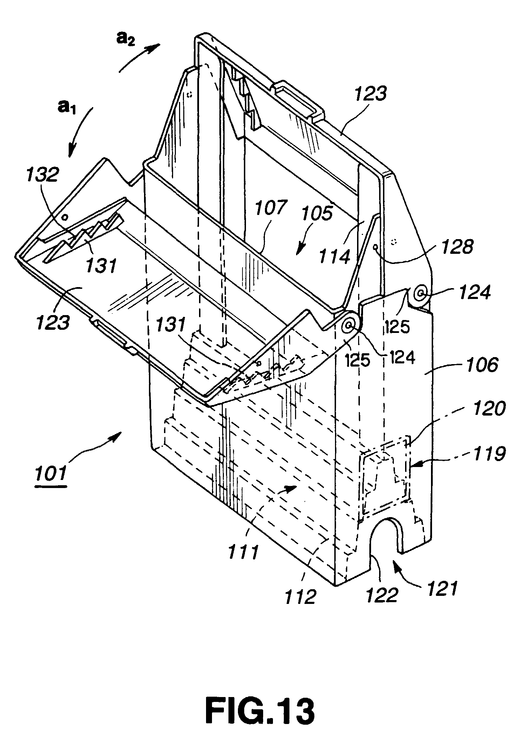

Referring to Figs.12 and 13, a tray container casing 101 according to the present invention includes a main casing member 106, having a tray container 105 accommodating plural disc trays 1, and an opening 107 via which to insert and eject the disc trays 1 for the tray container 105, and a lid 108 provided for opening/closing the opening 107 of the main casing member 106.

The main casing member 106 is formed of a light transmitting resin material and, as shown in Figs. 12 to 14, includes a tray container 105 for accommodating plural disc trays 1 in a stacked state in a direction of thicknesses thereof.

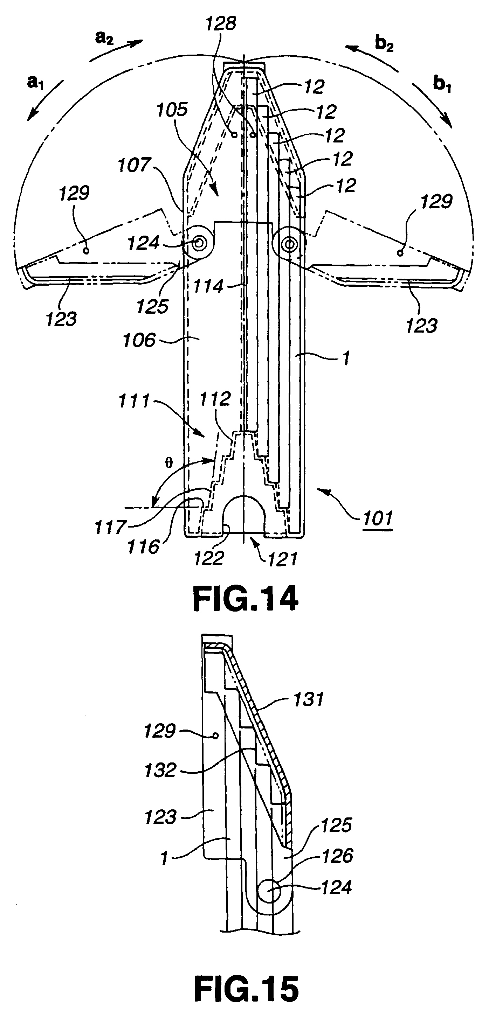

Referring to Fig. 14, the main casing member 106 includes a step difference unit 111 for arraying the plural disc trays 1, arranged in stacked state in the tray container 105, so that respective title indicators 12 of the disc trays 1 will face to outside of the main casing member 106 with step differences, as shown in Fig. 14.

The step difference unit 111 includes plural steps 112 on which one ends of the disc trays 1 housed in the tray container 105 abut and rest, as shown in Fig. 14. The step difference unit 111 has its uppermost step disposed at a mid portion of the main casing member 106, so that, when the respective disc trays 1 are housed in the tray container 105, the disc trays 1 are set with step differences symmetrical with respect to a mid position along the thicknesses of the respective disc trays 1 housed in the tray container 105, on both sides of the above-mentioned mid portion of the main casing member 106, as shown in Fig. 14.

Within the main casing member 106, there are arranged a set of partitioning plates 114, 114, centrally of the plural disc trays 1 housed in the tray container 105, with the partitioning plates 114, 114 extending in a direction along the thickness of the disc trays 1, for dividing the plural disc trays 1 in two portions, as shown in Figs. 12 to 14. That is, the inside of the tray container 105 of the main casing member 106 is divided by the partitioning plates 114, 114 into two housing regions. These partitioning plates 114, 114 are substantially rectangular in profile and are provided on both sides in the width-wise direction of the disc tray 1 housed in the tray container 105 for extending from an opening 107 in the main casing member 106 to the uppermost step of the step difference unit 111.

Therefore, the title indicators 12 of the respective disc trays 1, housed in the tray container 105 of the main casing member 106, may be viewed from respective lateral sides along the widths of the disc trays 1 accommodated in the tray container 105. The main casing member 106 is also provided with the aforementioned opening 107 through which may be protruded the respective title indicators 12 of the plural disc trays 1 housed in the tray container 105.

Each step 112 of the step difference unit 111 includes a first abutting surface 116, on which rests the lateral surface of the disc tray 1 housed in the tray container 105, and a second abutting surface 117, on which rests the first surface 8 or the second surface 9 of the disc tray 1. The first abutting surface 116 is formed parallel to the lower end face of the main casing member 106, as shown in Fig. 14. The second abutting surface 117 is inclined at an obtuse angle of inclination θ relative to the first abutting surface 116, as shown in Fig. 14.

In this step difference unit 111, in which each step 112 supporting the disc tray 1 has the second abutting surface 117 inclined at an obtuse angle relative to the first abutting surface 116 as shown in Fig. 14, the disc tray 1 set on the upper step of the step difference unit 111 is allowed to descend by its own gravity towards the lower end side.

Therefore, with this step difference unit 111, the disc tray 1 accommodated in the tray container 105 is allowed to slip sequentially towards the lower end side so that the disc trays 1 can be sequentially padded from the lower end side of the tray container 105 in position to permit facilitated housing of the disc trays 1.

Referring to Figs.12 and 13, there are provided memo indicators 119, 119 on both lateral sides of the main casing member 106 extending parallel to the direction of thickness of the disc trays 1housed in the tray container 105. The memo indicators 119, 119 are each provided with a memo label 120 stating the contents of the plural disc trays 1 housed in the tray container 105, case numbers or memoranda. Since the main casing member 106 is provided with the memo indicators 119, 119, it is possible to improve the operability in retrieving the disc trays 1 housing the desired optical disc 5 or the tray container casing 101.

Referring to Figs. 12 and 13, there are provided pullout operating portions 121, 121 adjacent to the memo indicators 119, 119 on the outer peripheral surfaces of the main casing member 106. These pullout operating portions 121, 121, are formed as openings 122 into which can be intruded the user's finger ends to pull out the tray container casing 101.

A lid 108 includes a pair of opening/closure members 123, 123 of a light-transmitting resin material, combined together.

The main casing member 106 is formed integrally with a rotary support shaft 124, in the vicinity of the opening 107, for rotatably supporting the opening/closure members 123, 123 in the direction indicated by arrows a₁, a₂ and b₁, b₂ in Fig. 14. The opening/closure members 123, 123 are each formed integrally with a pair of support pieces 125, 125, carried by the main casing member 106. Each of the support pieces 125, 125 has a shaft hole 126 through which is rotationally passed the rotary support shaft 124.

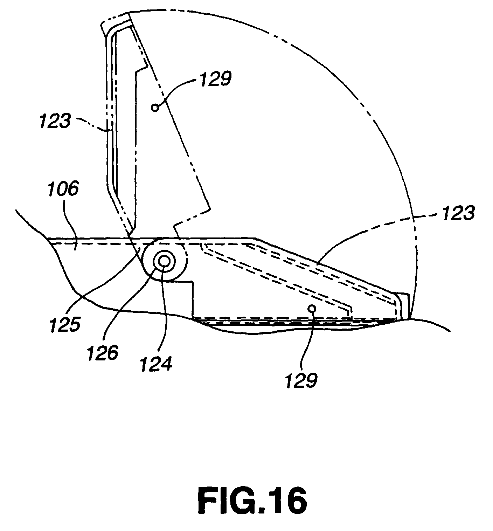

These opening/closure members 123, 123 may be operated for opening/closure so that one of the opening/closure members 123, 123 will be operated independently of the other, as shown in Figs. 13, 14 and 16. Thus, the housing areas of the tray container 105, created by the partitioning plate 114, may be used independently of each other.

The main casing member 106 has paired engagement projections 128 for maintaining the opening/closure members 123, 123 in the state of closing the opening 107. These engagement projections 128 are provided facing the opening/closure members 123, 123 rotated to the position of closing the opening 107, as shown in Fig. 14. The opening/closure members 123, 123 are provided with engagement recesses 129, engaged by the engagement projections 128 of the main casing member 106 when the opening/closure members 123, 123 have closed the opening 107 of the main casing member 106, as shown in Figs. 14 and 15, whereby the opening/closure members 123, 123 are reliably kept in the position of closing the opening 107.

The inner sides of the opening/closure members 123, 123 are formed integrally with controlling portions 131, 131, for facing both lateral sides along the widths of the disc trays 1 housed in the tray container 105, as shown in Figs.13 and 15. These controlling portions 131, 131 operate for preventing the lid 108 in the state of closing the main casing member 106 from being opened under the weight of the disc trays 1 housed in the tray container 105 when the main casing member 106 is placed upside-down with the lid 108 directing downwards.

These controlling portions 131, 131 each include plural steps 132 for compressing against the lateral sides of the disc trays 1, arrayed in steps in the step difference unit 111, as shown in Fig.14. With these controlling portions 131, 131, the lines of force acting for thrusting the opening/closure members 123, 123 from the inner sides acts in a direction parallel to the major surface of the disc tray 1 housed in the tray container 105, thus positively preventing the lines of force from acting for rotating the opening/closure members 123, 123 in the direction indicated by arrows a₁ and b₁ for opening the respective opening/closure members 123, 123.

The state in which plural disc trays 1 are housed in the tray container 105 of the tray container casing 101 is hereinafter explained.

When accommodated into the tray container casing 101, the disc tray 1 is introduced via the opening 107 of the main casing member 106 so that the title indicator 12 is positioned towards the opening 107 of the tray container casing 101 for facing to outside.

When accommodated in the tray container 105 of the tray container casing 101, the disc trays 1 are housed in position with the lateral sides thereof resting on the steps 112 of the step difference unit 111, as shown in Fig. 14.

When the plural disc trays 1 are housed in the tray container 105 of the tray container casing 101, the title indicators 12 of the respective disc trays 1 are exposed to outside by the step difference unit 111, to permit viewing from outside, as shown in Fig. 14. So, with the present tray container casing 101, a desired optical disc 5 can be retrieved readily by checking the title indicators 12 of the plural disc trays 1 housed in the tray container 105.

When taking out the desired disc tray 1, housed in the tray container 105, the disc tray 1 can be easily taken out by acting on the take-out operating portions 27, positioned on both sides of the title indicator 12, exposed to outside via the opening 107 provided in the main casing member 106, with the finger's end, by way of a take-out operation.

When re-accommodating the disc tray 1, once taken out from the tray container casing 101, the main casing member 106 of the tray container casing 101 is tilted in the direction of the steps of the step difference unit 111, whereby the disc trays 1 are moved so as to be sequentially stacked on the respective steps of the step difference unit 111, beginning from its lower side step, thus readily producing a housing space, in which to store the disc tray 1, on an upper step side of the step difference unit 111. So, the tray container casing 101 enables the disc tray 1 to be re-accommodated in the tray container 105.

Moreover, if plural tray containers 101 are arrayed on e.g., a storage shelf side-by-side in the direction of thickness of the disc trays 1, the tray container casing 101 accommodating the required optical disc 5 can readily be retrieved by checking the memo indicators 119, 119 provided on the lateral sides of the main casing member 106. In addition, the tray container casing 101 can readily be taken out from the shelf by the finger's end engaging in the pullout operating portions 121, 121 provided on the lateral sides of the main casing member 106.

With the above-described tray container casing 101, in which the respective disc trays 1, housed in the tray container 105, are housed in a vertically staggered relation to one another by the step difference unit 111, the title indicators 12 of the respective disc trays 1, housed in the tray container 105, may be checked visually to permit the desired optical disc 5 housed in the tray container 105 to be retrieved readily and quickly. Thus, with the present tray container casing 101, the operating performance in retrieving a desired optical disc 5 accommodated in the tray container 105 can be improved appreciably.

Moreover, even if there is a vacant space in the tray container 105 of the tray container casing 101, housing plural disc trays 1, the disc trays 1 housed in the tray container 105 can be maintained in the state of being arrayed in position in the step difference unit 111, so that the new disc tray 1 can readily be housed in the vacant space within the tray container 105.

In addition, in this tray container casing 101, in which the disc trays 1 accommodated in the tray container 105 are housed in vertically staggered relation to one another, the take-out operating portions 27 for taking out the disc trays 1 are projected outwards through the opening 107 of the main casing member 106, thus improving the operating performance in inserting or ejecting the disc tray 1 to or from the tray container 105.

On the other hand, with the present tray container casing 101, in which are housed the disc trays 1 each having a thickness of the order of one-half of the thickness of the conventional disc case, the overall size of the tray container casing 101 can be reduced to approximately one-half the size of the conventional housing box for the disc cases , thus significantly reducing the housing space required in housing a large number of optical discs 5.

In the above-described tray container casing 101, the step difference unit 111 is made up of plural steps 112. A modified tray container casing, having a modified step difference unit comprising an inclined surface, is explained with reference to the drawings. Since this modified tray container casing has the basic structure excluding the modified step difference unit in common with the above-described tray container casing 101, the same parts or components as those of the tray container casing 101 are depicted by the same reference numerals and the corresponding description is omitted for simplicity.

A disc tray housed in the tray container casing has a cut-out corresponding to the step difference unit. This modified disc tray is now explained briefly with reference to the drawings. Since this modified disc tray has the basic structure excluding the inclined surface in common with the above-described disc tray 1, the same parts or components as those of the disc tray 1 are depicted by the same reference numerals and the corresponding description is omitted for simplicity.

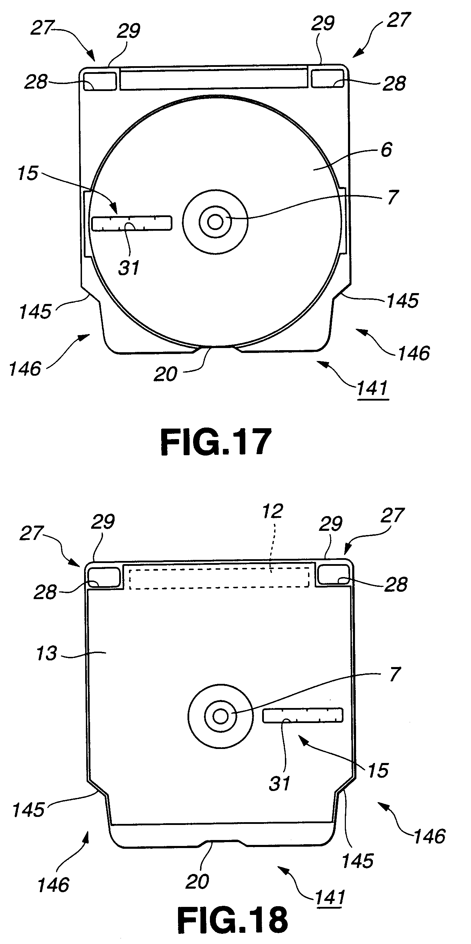

Referring to Figs.17 and 18, this disc tray 141 has a cut-out 146 in the lateral surface in each lateral side, in its width-wise direction, so as to affect the lateral surface on the lower end side. The cut-out 146 has a slide contact surface 145 for having sliding contact with the inclined surface of the step difference unit of the main casing member as will be explained subsequently. Although the slide contact surface 145 is at the lower end side of the disc tray 141 and inclined relative to its lateral surface, it may also be formed parallel to the lateral surface on the lower end side of the disc tray 141. The slide contact surface 145 may also be formed by a projection formed on each lateral surface in the width-wise direction of the disc tray 141.

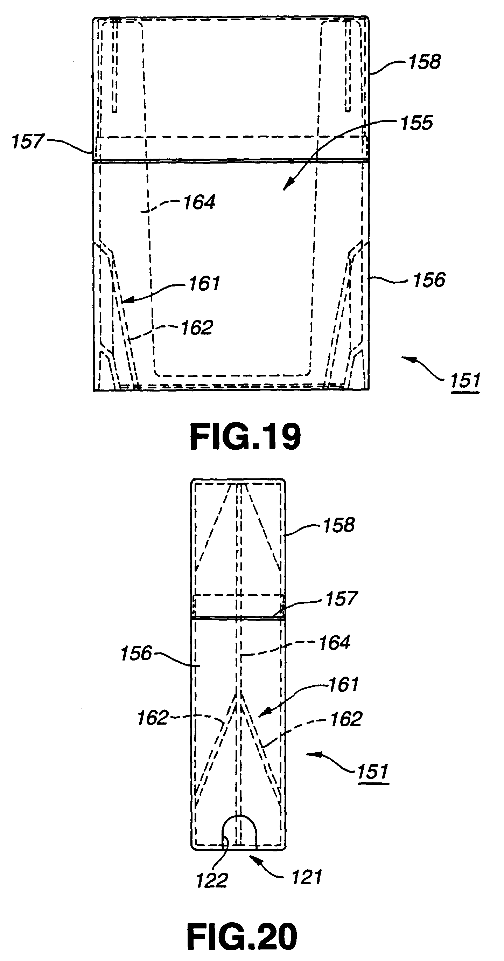

Referring to Figs. 19 to 22, the modified tray container casing 151 is provided with a main casing member 156 having a tray container 155 for housing plural disc trays 141 in a stacked state in the thickness direction and an opening 157 for inserting and removing the disc trays 141 to or from the tray container 155. This tray container casing 151 also has a so-called cap type lid 158 that can be mounted to or dismounted from the main casing member 156.

Referring to Figs.19 to 22, the main casing member 156 is provided with a step difference unit 161 for arraying the title indicators 12 of the plural disc tray 141 housed in the tray container 155 for facing outwards in a vertically staggered relation to one another.

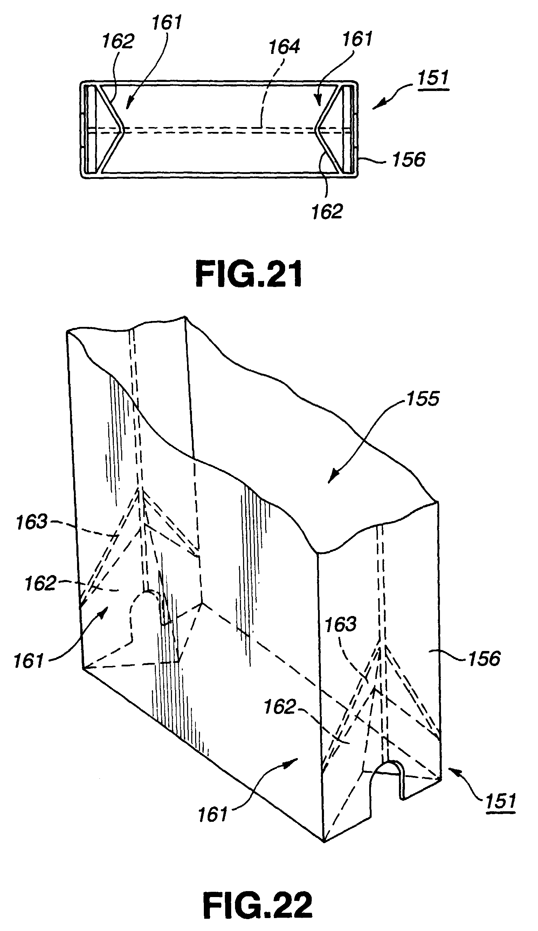

Referring to Figs.19 to 22, the step difference unit 161 includes, on both sides along the width of the disc tray 141, a main inclined surface 162, for permitting the disc tray 141 to slide from the upper end side to the lower end side of the tray container 155, and a subsidiary inclined surface 163, having a different inclination angle, and which is formed in continuation to the upper side of the main inclined surface 162. Referring to Figs.20 and 22, the main inclined surface 162 is inclined relative to the direction of the thickness of the disc trays 141 housed in the tray container 155.

The main inclined surface 162 may also be formed integrally with plural fine steps or irregularities, not shown, narrower in width than the thickness of the disc tray 141, for suppressing the sliding of the disc tray 141. If the main inclined surface 162 is formed integrally with these fine steps or the like, the disc trays 141 can readily be suppressed from sliding inadvertently so as to be fixed in position. Meanwhile, the main inclined surface 162 may also be formed with fine plural steps each having a width narrower than the thickness of the disc tray 141.

The step difference unit 161 is arranged so that its upper end is positioned at a mid portion of the main casing member 156 to array the disc tray 141 in steps symmetrical with respect to the mid portion along the thickness of the tray container casing151, as shown in Fig.20.

Thus, the main casing member 156 permits the title indicators 12 of the disc trays 141 housed in the tray container 155 to be viewed from respective lateral sides in the width-wise direction of the disc trays 141 housed in the tray container 155.

Referring to Figs. 19 and 20, the main casing member 156 is provided with a set of partitioning plates 164 for dividing the plural disc trays 141 housed in the tray container 155 into two portions. The partitioning plates 164 are arranged at a mid potion in a direction along the thickness of the plural disc trays 141 on both sides along the width of the disc trays 141 housed in the tray container 155. These partitioning plates 164 are substantially rectangular in profile and are formed astride the step difference unit 161 from the opening 157 of the main casing member 156 along its bottom side.

Referring to the drawings, the state in which plural disc trays 141 are housed in the tray container 155 of the tray container casing 151 is explained in detail.

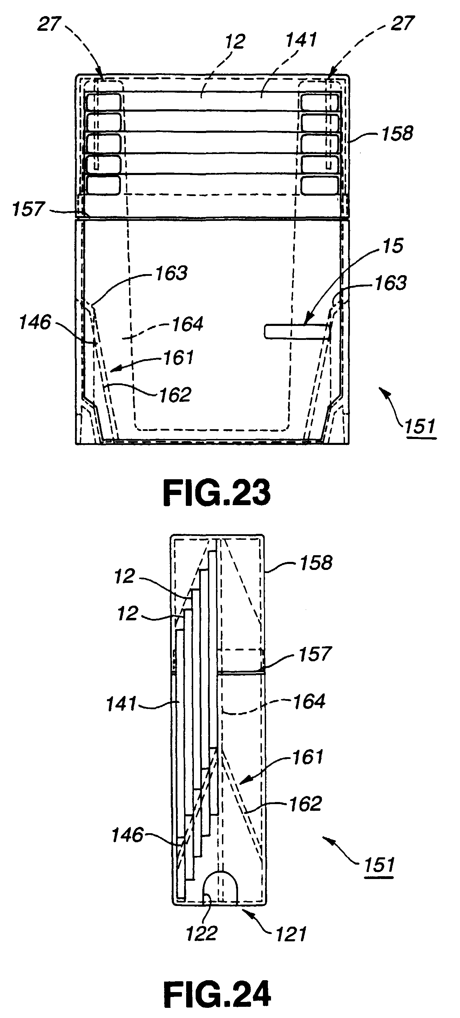

When the disc trays 141 are housed in the tray container casing 151, the disc trays 141 are inserted through the opening 157 of the main casing member 156, as shown in Fig.23 and 24, so that the title indicators 12 are directed to outside the main casing member 156 and so that the cut-out 146 having the slide contact surface 145 will be directed to the lower end side of the tray container 155, with the title indicators 12 lying towards the opening 157 of the tray container 155.

When the disc trays 141 are housed in the tray container 155 of the tray container casing 151, the slide contact surfaces 145 of the disc trays 141 rest on the main inclined surface 162 of the step difference unit 161, as shown in Figs.23 and 24. The disc trays 141, having the slide contact surface 145 set in sliding contact with the main inclined surface 162 of the step difference unit 161, are sequentially housed in position in the tray container 155, with the lower side in the tray container 155 being the first to receive the disc tray 141, by the slide contact surface 145 sliding down the main inclined surface 162 of the step difference unit 161 from the upper to the lower sides under the weight of the disc trays 141.

Therefore, this tray container casing151, housing the disc trays 141 each carrying the cut-out 146 having the slide contact surface 145, includes the step difference unit 161 having the main inclined surface 162, whereby the disc trays 141 may be arrayed so that the title indicators 12 of the plural disc trays 141 housed in the tray container 155 face to outside in a vertically staggered relation to one another.

Thus, with the present tray container casing 151, the title indicators 12 of the disc trays 141 housed in the tray container can be viewed to improve the operating performance in retrieving the desired optical disc from plural disc trays housed in the tray container155.

## Claims

1. A tray container casing for housing a plurality of disc trays, said disc tray each including a disc housing recess for housing an optical disc and a title indicating portion having a title label demonstrating the recording contents of the information of the optical disc accommodated in said disc housing recess, said title indicating portion being provided adjacent to the outer rim of at least a major surface thereof, said tray container casing including
a main casing member having a tray container for housing a plurality of said disc trays in a stacked fashion in the direction of the thickness thereof and an opening through which said disc trays are inserted or ejected for said tray container; and
a lid for opening/closing said aperture of said main casing member;
said main casing member carrying a step difference unit for arraying said disc trays housed in a stacked fashion in said tray container so that the respective title indicating portions of said disc tray will face to outside in a vertically staggered relation to one another.

2. The tray container casing according to claim 1 wherein
said step difference unit is provided in said main casing member so that a plurality of steps symmetrical with respect to a mid portion in a direction along the thickness of said disc trays housed in said tray container are formed to permit the title indicating portions of the disc trays housed in said tray container may be viewed from each lateral surface of said main casing member.

3. The tray container casing according to claim 2 wherein
said main casing member is provided with a partitioning unit for dividing the disc trays housed in said tray container into two portions in a direction along the thickness of the disc trays housed in said disc container, said partitioning unit being provided at a mid portion in the direction along the thickness of said disc trays.

4. The tray container casing according to claim 1 wherein
said step difference unit includes a plurality of steps.

5. The tray container casing according to claim 1 wherein
said step difference unit is provided on said main casing member so as to form an inclined surface extending from an upper side towards a lower side of said tray container for permitting sliding movement of said disc trays thereon;
each disc tray including a slide contact portion on each lateral side in its width-wise direction for sliding contact on said inclined surface of said step difference unit.

6. The tray container casing according to claim 1 wherein
said lid is rotatably supported on said main casing member.

7. The tray container casing according to claim 6 wherein
said lid includes a pair of opening/closure members combined together to open/close the housing areas defined by said partitioning unit independently of each other.

8. The tray container casing according to claim 7 wherein
said lid includes a controlling portion having a stepped profile on which abuts the outer rim of each disc tray housed in said tray container, so that, when the main casing member is placed upside down with said lid directed downwards, with said lid closing the opening of said main casing member, said controlling member prohibits said lid from being opened.

9. The tray container casing according to claim 6 wherein
said lid is rotatable up to a position of keeping the opened state of the opening in said main casing member in a state in which said main casing member is arranged so that the major surface of the disc tray housed in said tray container is horizontal.

10. The tray container casing according to claim 6 wherein
said lid is provided with a lid opening/closure operating portion.

11. The tray container casing according to claim 1 wherein
said lid is detachably mounted on said main casing member.

12. The tray container casing according to claim 1 wherein
said main casing member is provided with a pullout operating portion on its outer rim for pulling out said tray container casing.

13. The tray container casing according to claim 12 wherein
said pullout operating portion is formed as a cut-out in a lateral surface of said main casing member lying parallel to the direction of thickness of said disc tray housed in said tray container.

14. The tray container casing according to claim 4 wherein
each step of said step difference unit is inclined so that a first abutment surface thereof to which abuts the major surface of said disc tray is at an obtuse angle relative to a second abutment surface thereof on which abuts a lateral surface of said disc tray.

15. The tray container casing according to claim 1 wherein
said main casing member has an opening through which is protruded each title indicating portion of said disc tray housed on the lowermost step of said step difference unit in said tray container.

16. The tray container casing according to claim 15 wherein
said lid is formed of a light transmitting material to permit each title indicating portion of said disc tray housed in said tray container to be viewed.
